# EUROPÄISCHE PATENTSCHRIFT

(11) **EP 2 597 210 B1**
(45) Veröffentlichungstag und Bekanntmachung des Hinweises auf die Patenterteilung: **16.03.2016**
(21) Anmeldenummer: 11190346.4
(22) Anmeldetag: 23.11.2011
(51) Int. Cl.: E02F 9/22, F15B 11/00

(54) **Elektrohydraulische Steuervorrichtung**
Electrohydraulic control device
Dispositif de commande hydroélectrique

(43) Veröffentlichungstag der Anmeldung: 29.05.2013
(73) Patentinhaber: HAWE Hydraulik SE, 81673 München (DE)
(72) Erfinder: Macit, Recep, 81673 München (DE); Heusser, Martin, 81245 München (DE)
(74) Vertreter: Grünecker Patent- und Rechtsanwälte PartG mbB

(56) Entgegenhaltungen:
- EP-A2- 2 031 256
- DE-A1- 10 107 139
- DE-A1-102005 005 314
- DE-B4- 10 296 738
- US-B1- 6 186 044

## Beschreibung

Die Erfindung betrifft eine elektrohydraulische Steuervorrichtung der im Oberbegriff des Patentanspruchs 1 angegebenen Art.

Bei aus EP 2 031 256 A und DE 10 2005 005 314 A bekannten elektronisch-hydraulischen Hubwerksregelungen (EHR für einen doppelt wirkenden Hydromotor) ist das Mehrstellungs-Mehrwege-Schieberventil ein Vierstellungs-Vierwege-Schieberventil mit zwei Proportional-Magneten, dessen Schieber eine die Arbeitsleitungen von der Tank-Druckquellen-Anordnung trennende erste Neutralstellung, zweite und dritte Stellungen zum wechselweisen Verbinden einer Arbeitsleitung mit der Druckquelle bzw. dem Tank, sowie als vierte Stellung zum Einstellen einer Schwimmstellung des Hydromotors eine für beide Arbeitsleitungen zum Tank offene Neutralstellung einnehmen kann. Die beiden Arbeitsstrom-2/2-Druckregelsitzventile halten im geschlossenen Zustand assistiert durch die erste Neutralstellung des Vierstellungs-Vierwege-Schieberventils die Last, und werden ansonsten entsprechend gewünschter EHR-Funktionen in ihren Öffnungsrichtungs-Druckvorsteuerungen mit Steuerdruck beaufschlagt, der in den zweiten und dritten Stellungen des Vierstellungs-Vierwege-Schieberventils aus einer Steuerdruckversorgung der Proportional-Druckvorsteuerungen des Vierstellungs-Vierwege-Schieberventils über den Schieber abgegriffen wird. Vierstellungs-Vierwege-Schieberventile sind baulich aufwendig und teuer. Das Ansprechverhalten bei einer Nachregelung ist zögerlich und die Energiebilanz ist u.a. wegen Drosselverlusten ungünstig. Eine Verknüpfung der elektronisch-hydraulischen Hubwerksregelung beispielsweise mit einem Zentralrechner, z.B. über ein CAN-Bussystem, ist nicht ohne Weiteres möglich.

Elektronisch-hydraulische Hubwerksregelungen werden an unterschiedlichen Arbeitsmaschinen benötigt, wie an Landmaschinen, Schneeräumern, Baumaschinen, Kehrmaschinen und dergleichen, die ein durch den doppelt wirkenden Hydromotor verstellbares Hubwerk, bei Schleppern für die Landtechnik typischerweise die 3-Punkt-Aufhängung, aufweisen. Für die elektronisch-hydraulische Hubwerkregelung sind konventionell viele Sensoren mit einem computerisierten Steuergerät verknüpft, die z.B. die Fahrgeschwindigkeit, die Motordrehzahl, die Kraft, den Druck, Lagen und dergleichen abgreifen, um die verschiedensten EHR-Funktionen zu ermöglichen. Eine Auswahl an EHR-Funktionen ist eine Lageregelung, eine Zugkraftregelung, eine Mischregelung, eine Schlupfregelung, eine Druckregelung, eine Anpresskraftregelung, eine Schwingungsdämpfung, eine externe Regelung, gegebenenfalls eine Wiegefunktion und dergleichen, zuzüglich einer Schwimmstellungsfunktion, die beispielsweise gebraucht wird, damit ein Werkzeug am Hubwerk Bodenunebenheiten unabhängig von den Fahrbewegungen des Schleppfahrzeuges folgen kann. Bei der Lageregelung wird die Lage des Hubwerks, abgegriffen von einem Lagesensor, als Regelgröße benutzt. Bei einer Zugkraftregelung ist die Regelgröße beispielsweise die an unteren Lenkern des Hubwerks wirkende Kraft, abgegriffen von einem Kraftsensor. Durch Konstanthalten dieser Regelgröße ist eine optimale Auslastung der Schlepperleistung möglich. Bei einer Mischregelung werden Regelabweichungen von Lage und Zugkraft in einem einstellbaren Verhältnis gemischt und als eine Regelgröße verarbeitet. Hierdurch können beispielsweise Änderungen der Arbeitstiefe auf Grund unterschiedlicher Bodenwiderstände minimiert werden. Bei der Schlupfregelung werden der Zeit- und Kraftstoffaufwand des Schleppers verringert, der Reifenverschleiß minimiert, der Boden geschont und der Fahrer entlastet, wobei die Meldungen des Fahrgeschwindigkeit- und Motordrehzahlsensors beispielsweise verarbeitet werden und das Mehrstellungs-Mehnwege-Schieberventil entsprechend angesteuert wird. Bei der Druckregelung kann beispielsweise eine optimale Bodenverdichtung erzielt werden, wobei Signale von Drucksensoren verarbeitet und das Mehrwege-Mehrstellungs-Schieberventil entsprechend angesteuert wird. Dies gilt analog auch für die Regelung der Anpresskraft von Arbeitsgeräten. Die Schwingungsdämpfung zielt darauf ab, Achslastschwankungen beim Transport schwerer Anbaugeräte zu minimieren, wobei hierfür Signale von Lage- und Kraftsensoren verarbeitet werden. Bei einer externen Regelung werden beispielsweise an einem Anbaugerät angeordnete Lagesensor-Signale ausgewertet und verarbeitet, um das Anbaugerät in einer definierten Position über die Ansteuerung des Mehrwege-Mehrstellungs-Schieberventils zu regeln. Bei der Wiegefunktion werden Signale von Kraft- und/oder Drucksensoren verarbeitet. Die Schwimmstellungsfunktion hat, wie erwähnt, ungedämpfte oder gedämpfte Eigenbewegungen des Hubwerks mit dem daran angebrachten Anbaugerät zuzulassen. Weiterer Stand der Technik zu einer elektronisch-hydraulischen Hubwerksregelung ist dem Produkt-Katalog EHR der Firma Rexroth aus 09/1999 mit der Nummer 1 987 760 507 AKY 005/7, Seiten 1 bis 8, zu entnehmen.

In der europäischen Patentanmeldung mit dem Aktenzeichen 10 195 694.4 mit älterem Zeitrang wird eine elektrohydraulische Steuervorrichtung zum Betätigen eines doppelt wirkenden Hydromotors vorgeschlagen, bei der eine Schwimmstellung des Hydromotors dadurch einstellbar ist, dass Arbeitsstrom-2/2-Druckregelsitzventile in den Arbeitsleitungen gleichzeitig mit Steuerdrücken aufgesteuert werden, die aus Proportional-Druckvorsteuerungen eines Dreistellungs-Vierwege-Schieberventils abgegriffen werden. Das Dreistellungs-Vierwege-Schieberventil hat zwei Proportional-Druckvorsteuerungen für den Schieber, jeweils mit einem Proportional-Magneten. Die beiden Proportional-Magneten werden für die Schwimmstellung gemeinsam und gleich bestromt. Obwohl das Dreistellungs-Vierwege-Schieberventil keine vierte Stellung als Neutralstellung mit abgesperrten Arbeitsleitungen aufweist, ist auch eine hydraulische Blockierung des Hydromotors einstellbar. Diese vorgeschlagene elektrohydraulische Steuervorrichtung ist jedoch nicht in eine multifunktionelle elektronisch-hydraulische Hubwerksregelung eingegliedert.

Weiterer Stand der Technik ist zu finden in: DE 101 07 139 A1, DE 102 96 738 B4 und US 6 186 044 B1.

Der Erfindung liegt die Aufgabe zu Grunde, eine elektrohydraulische Steuervorrichtung der eingangs genannten Art anzugeben, die bei verringertem baulichem Aufwand für vielfältige Funktionen einschließlich einer Schwimmstellungs-Funktion des doppelt wirkenden Hydromotors einer elektronisch-hydraulischen Hubwerksregelung brauchbar ist.

Die gestellte Aufgabe wird mit den Merkmalen des Patentanspruchs 1 gelöst.

Weil erfindungsgemäß die Schwimmstellung in der offenen Neutralstellung durch gleichzeitiges Bestromen beider Proportional-Druckvorsteuerungen einstellbar ist, genügt für die vielfältigen Funktionen der elektronisch--hydraulischen Hubwerksregelung ein kostengünstiges und schnell ansprechendes Dreistellungs-Mehrwege-Schieberventil nur mit einer zum Tank offenen Neutralstellung, um dennoch alle erforderlichen EHR-Funktionen durchführen zu lassen. Die gleichzeitige Bestromung, zweckmäßig mit gleichem Stromwert, beider Proportional-Druckvorsteuerungen ist steuerungsseitig einfach beherrschbar, so dass die elektrohydraulische Steuervorrichtung problemlos in ein Bussystem eingliederbar ist. Die vierte Stellung, das heißt die hydraulische Blockierung des Hydromotors, die für bestimmte EHR-Funktionen benötigt wird, ist nicht auf die Mitwirkung des Schiebers des Dreistellungs-Vierwege-Schieberventils angewiesen, sondern den Arbeitsstrom-2/2-Druckregelsitzventilen zugewiesen, die zweckmäßig als hydraulisch entsperrbare Rückschlagventile ausgebildet sein können und in Abwesenheit jeglicher Steuerdrücke aus den Proportional-Vorsteuerungen die Last leckagefrei halten. Das Dreistellungs-Vierwege-Schieberventil kann baulich einfach ausgeführt sein, da für die EHR-Funktionen keine durch den Schieber hindurch übertragenen Steuerdrücke benötigt werden, abgesehen von konventionell abgegriffenen Lastdrucksignalen. Das Dreistellungs-Vierwege-Schieberventil ist somit in der Lage, solche EHR-Funktionen zu steuern und zu regeln, die eingangs aufgelistet sind. Der Wegfall eines Vierstellungs-Vierwege-Schieberventils resultiert in einer signifikant baulichen Vereinfachung der elektronisch-hydraulischen Hubwerksregelung und auch in einer schaltungstechnischen Vereinfachung, die Drossel- und Leckverluste minimiert und das Ansprechverhalten für die EHR-Funktionen verbessert.

Das Dreistellungs-Vierwege-Schieberventil kann eines sein, das auf anderen Gebieten der Hydrauliktechnik, z.B. in der Kranhydraulik, üblich ist, beispielsweise der Typen PSL (für eine Konstantpumpe als Druckquelle) oder PSV (für eine Verstellpumpe als Druckquelle) der Anmelderin.

Bei einer zweckmäßigen Ausführungsform ist hier die Steuerleitung an eine am Drei-Stellungs-Schieberventil vorgesehene Anzapfung jeweils einer Proportional-Druckvorsteuerung angeschlossen, wobei die Anzapfung zu einem Kanal oder zu einer Steuerkammer des Dreistellungs-Schieberventils führt, in welchem bzw. in welcher ein über einen jeweiligen Proportional-Magneten betätigtes Druckminderungsventil einen tatsächlichen, aus einem Druckniveau der Steuerdruckversorgung proportional gesteuerten Schieber-Betätigungsdruck generiert, der als Steuerdruck in die jeweilige Steuerleitung einspeisbar ist. Die einander entgegengesetzt wirkenden Schieberbetätigungsdrücke heben einander auf, und der Schieber ist von der Federanordnung entweder in die Neutralstellung einstellbar und/oder in dieser haltbar. Die Arbeitsstrom-2/2-Druckregelsitzventile werden somit direkt aus den Proportional-Druckvorsteuerungen des Dreistellungs-Schieberventils angesteuert, ohne den Schieber hierfür zu benutzen, so dass keine Zeit für Schieberbewegungen und zum Auf- und Zusteuern von Strömungswegen im Schieber vergeudet wird. Dies verbessert das Ansprechverhalten, was für bestimmte EHR-Funktionen wichtig ist.

Bei einer schaltungstechnisch einfachen Ausführungsform weist jedes Arbeitsstrom-2/2-Druckregelsitzventil eine Öffnungsrichtungs-Druckvorsteuerung auf, an die jeweils eine Steuerleitung angeschlossen ist, und die ein differenzdruckabhängig bis in eine Absperrstellung umstellbares Wechselventil enthält. Zur differenzdruckabhängigen Umstellung des Wechselventils führt von jedem Wechselventil eine Hilfssteuerleitung zu derjenigen Arbeitsleitung, in der das jeweils andere Arbeitsstrom-2/2-Druckregelsitzventil angeordnet ist. Auf diese Weise lässt sich nicht nur eine proportionale Druckregelung mit den Arbeitsstrom-2/2-Druckregelsitzventilen bei durchgängigen Steuerleitungen vornehmen, sondern auch eine leckagefreie Lasthaltestellung ohne Mitwirkung des Schiebers des Dreistellungs-Schieberventils aus den Arbeitsleitungen einstellen, sobald die Wechselventile die Steuerleitungen absperren.

Zweckmäßig ist jedes Arbeitsstrom-2/2-Druckregelsitzventil ein hydraulisch entsperrbares Rückschlagventil, das mit einem Aufsteuerverhältnis von etwa 1:25 bis 1:50 zwischen dem Aufsteuerdruck und einem Lastdruck ausgelegt ist. Zur Betätigung der Arbeitsstrom-2/2-Druckregelsitzventile sind wegen des niedrigen Aufsteuerverhältnisses relativ moderate Steuerdrücke erforderlich, um selbst hohe Lastdrücke von 350 bis 400 bar oder mehr problemlos beherrschen zu können.

Schließlich ist es zweckmäßig, wenn die elektrohydraulische Steuervorrichtung in der elektronisch-hydraulischen Hubwerksregelung an wenigstens ein elektrisches Steuergerät angeschlossen ist, das für EHR-Funktionen mit unterschiedlichen Sensoren verknüpft ist, die an entsprechenden Stellen im Fahrzeug, am Anbaugerät und/oder am Hubwerk platziert sind.

Die Erfindung zeichnet sich im Wesentlichen dadurch aus, dass die wegen des Dreistellungs-Schieberventils strukturell sehr einfache elektrohydraulische Steuervorrichtung in die elektronisch-hydraulische Hubwerksregelung integriert und so ausgebildet ist, dass ohne vierte Schaltstellung des Schiebers und nur mit direkt aus dem Proportional-Druckvorsteuerungen des Dreistellungs-Schieberventils abgeleiteten Steuerdrücken die für bestimmte EHR-Funktionen erforderliche Schwimmstellungsfunktion des doppelt wirkenden Hydromotors einstellbar ist, ohne hierfür den Schieber mit seinen Strömungswegen einzusetzen.

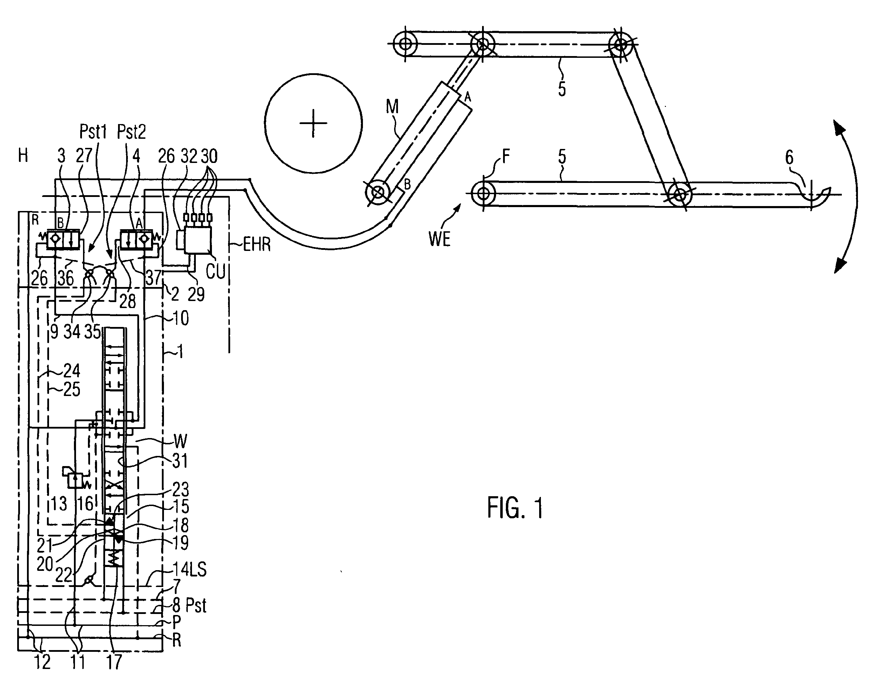

Anhand der Zeichnung wird eine Ausführungsform der Erfindung erläutert, wobei in der Zeichnung Fig. 1 ein Blockschaltbild mit Hauptkomponenten einer elektronisch-hydraulischen Hubwerkregelung mit schematisch angedeuteten Hubwerkskomponenten ist.

Die anhand Fig. 1 erläuterte elektrohydraulische Steuervorrichtung H ist beispielsweise für Arbeitsmaschinen, Landmaschinen, Kehr- oder Räummaschinen, Baumaschinen wie Radladern oder Baggern, Unimogs mit einem Anbaugerät und dergleichen in einer elektronisch-hydraulischen Hubwerksregelung EHR, beispielsweise für Werkzeuge oder Anbaugeräte, bestimmt, wobei eine der EHR-Funktionen eine Schwimmstellung des doppelt wirkenden Hydromotors M ist, in welcher der Hydromotor M mit einem Tank R verbunden ist.

Für die elektronisch-hydraulische Hubwerksregelung EHR ist wenigstens ein elektronisches, vorzugsweise computerisiertes, Steuergerät CU vorgesehen, das elektrisch über Leitungen 29 mit der Steuervorrichtung H und auch mit mehreren Sensoren 30 verbunden ist, die in einem mit der elektronisch-hydraulischen Hubwerksregelung EHR ausgestatteten Fahrzeug F, im Bereich dessen Hubwerks WE und/oder an einem Anbaugerät (nicht gezeigt) platziert sind, und Signale liefern, die vom Steuergerät CU für unterschiedliche EHR-Funktionen verarbeitet werden. Als Hubwerk WE dient beispielsweise eine Art Dreipunktanbauvorrichtung (schematisch dargestellt), die durch den wenigstens einen doppelt wirkenden Hydromotor M (Anschlüsse A, B) betätigt wird, und Lenker 5 sowie eine Aufhängung 6 aufweist. Die elektronisch-hydraulische Hubwerksregelung EHR kann beispielsweise innerhalb eines CAN-Bussystems, gegebenenfalls mit einem Zentralrechner (nicht gezeigt) betrieben werden.

Die elektrohydraulische Steuervorrichtung H ist beispielsweise aus Blöcken 1, 2 in einem Blockaufbau zusammengesetzt, wobei für weitere EHR-Funktionen oder andere Hydroverbraucher weitere (nicht gezeigte) Blöcke in den Blockaufbau eingegliedert werden können. Der Block 1 enthält ein Dreistellungs-Schieberventil W (Dreistellungs-Vierwege-Schieberventil) mit einem symbolisch angedeuteten Schieber 31, einem Zulaufregler 13, einer Tankleitung 12 zum Tank R, einer Druckleitung 11 von einer Druckquelle P, Steuerleitungen 7, 8 für Steuerdrücke Pst einer Steuerdruckversorgung (nicht gezeigt), und einen Lastdrucksignalkreis 14 für ein Lastdrucksignal LS, das beispielsweise zum Regeln der Druckversorgung der Druckquelle (Verstellpumpe oder Konstantpumpe) nutzbar ist.

Der Block 2 enthält in den beiden Arbeitsleitungen 9, 10 des doppelt wirkenden Hydromotors M jeweils ein Arbeitsstrom-2/2-Druckregelsitzventil 3, 4 (eine Art druckvorgesteuertes Lasthalteventil oder Rückschlagventil mit leckagefreier Sperrstellung) zum Steuern von bei A, B angedeuteten Arbeitsströmen.

Das Steuerdruckniveau Pst kann weitestgehend konstant sein und dient der Versorgung von Proportional-Druckvorsteuerungen 15, 16 des Dreistellungs-Schieberventils W. Für das Steuerdruckniveau Pst könnte eine eigene Druckquelle vorgesehen sein oder Druck von beliebiger anderer Stelle bereitgestellt werden. Das Steuerdruckniveau kann zwischen etwa 30 bis 40 bar liegen.

Der Schieber 31 des Dreistellungs-Schieberventils W ist in eine Neutralstellung O einstellbar, sowie in zwei Steuerstellungen a, b. In der Neutralstellung O sind beide Arbeitsleitungen 9, 10 über den Schieber 31 miteinander und mit der Tankleitung 12 verbunden. Die Neutralstellung O wird beispielsweise über eine Federanordnung 17 eingestellt, die an dem Schieber (Schieberkolben) 31 angreift. Die beiden Proportional-Druckvorsteuerungen 15, 16 weisen jeweils einen Proportional-Magneten 18, 20 und beispielsweise ein Druckminderventil 19, 21 auf, sowie jeweils eine Anzapfung 22, 23, an der der tatsächlich von der jeweiligen Proportional-Druckvorsteuerung 15, 16 für den Schieber 31 eingesteuerte Betätigungsdruck (Pst1, Pst2) über Steuerleitungen 24, 25 in den Block 2 und dort an die Arbeitsstrom-2/2-Druckregelsitzventile 3, 4 übertragbar ist.

Im Block 2 weist jedes Arbeitsstrom-2/2-Druckregelsitzventil 3, 4 eine Sperrrichtungs-Druckvorsteuerung 26 mit einer von einer Arbeitsleitung 9 oder 10 abzweigenden Vorsteuerleitung sowie eine Öffnungsrichtungs-Druckvorsteuerung 27, 28 (gegen eine Regelfeder wirkend) auf. In jeder Steuerleitung 24, 25 ist ein Wechselventil 34, 35 enthalten, das entweder die Steuerleitung 24, 25 durchgängig hält oder absperrt, und zwar differenzdruckabhängig, d.h. abhängig von der Druckdifferenz zwischen dem jeweiligen Steuerdruck Pst1, Pst2 und einem über eine Hilfssteuerleitung 36, 37 aus der jeweils anderen Arbeitsleitung 9, 10 abgegriffenen Steuerdruck. Die beiden Wechselventile 34, 35 sind sozusagen über Kreuz verschaltet.

### Funktionen:

In der in Fig. 1 gezeigten Kondition der elektrohydraulischen Steuervorrichtung H in der elektronisch-hydraulischen Hubwerksregelung EHR sind beide Proportional-Magneten 18, 20 der Proportional-Druckvorsteuerungen 15, 16 unbestromt und ist der Schieber 31 in die Neutralstellung O gestellt. Da keine Steuerdrücke Pst1, Pst2 anliegen, ist der doppelt wirkende Hydromotor M hydraulisch blockiert, da die Arbeitsstrom-2/2-Druckregelsitzventile 3, 4 zumindest durch die Regelfedern in den leckagefreien Sperrstellungen sind.

Um in die Arbeitsleitung 9 Hydraulikmedium einzuspeisen, wird der Proportional-Magnet 18 bestromt (PE01), so dass der Schieber 31 in die Stellung b gestellt wird, und zwar abhängig vom Stromwert der Bestromung, so dass die Druckleitung 11 mit der Arbeitsleitung 9 verbunden ist. Die Arbeitsleitung 10 ist dann mit dem Tank R Verbunden. Auf Grund der Bestromung des Proportional-Magneten 18 liegt an der Anzapfung 22 der tatsächliche Steuerdruck Pst1 an, den die Steuerleitung 24 direkt an die Öffnungsrichtungs-Druckvorsteuerung 27 des Arbeitsstrom-2/2-Druckregelsitzventils 3 überträgt, so dass diese eine proportionale Offenstellung einnimmt. Über das Wechselventil 35 und die Hilfssteuerleitung 36 wird mit Arbeitsdruck aus der Arbeitsleitung 9 das andere Arbeitsstrom-2/2-Druckregelsitzventil 4 entsprechend proportional aufgesteuert, so dass Hydraulikmedium aus der Arbeitsleitung 10 über den Schieber 31 zum Tank R ausgeschoben wird. Das Wechselventil 34 hält unter dem Steuerdruck Pst1 die Steuerleitung 24 durchgängig. Um über die Arbeitsleitung 10 Hydraulikmedium in den Hydromotor einzuspeisen, wird umgekehrt vorgegangen, d.h. wird der Proportional-Magnet 20 bestromt, um nun den Schieber in die Stellung a einzustellen.

Um die Schwimmstellung des Hydromotors M einzustellen, werden beide Proportional-Magneten 18, 20 gleichzeitig und gleichartig bestromt, so dass das Dreistellungs-Schieberventil W entweder die Neutralstellung O einnimmt oder/und in dieser gehalten wird, unterstützt durch die Federanordnung 17. In beiden Steuerleitungen 24, 25 wirken die gleichen Steuerdrücke Pst1, Pst2, die an den beiden Öffnungsrichtungs-Druckvorsteuerungen 27, 28 beide Arbeitsstrom-2/2-Druckregelsitzventile 3, 4 aufsteuern, so dass beide Seiten des Hydromotors M miteinander und über den Schieber 31 mit dem Tank verbunden sind.

Der Steuerdruck Pst1, Pst2 kann in jeder Steuerleitung 24, 25 proportional zur Bestromung des Proportional-Magneten 18, 20 eingesteuert werden, beispielsweise bei einem Steuerdruckniveau Pst von etwa 30 bis 40 bar in den Steuerleitungen 7, 8 mit etwa 3 bis 25 bar in den Steuerleitungen 24, 25. Die Arbeitsstrom-2/2-Druckregelsitzventile 3, 4 sind mit einem Aufsteuerverhältnis zweckmäßig von etwa 1:25 bis 1:50 ausgelegt (Verhältnis zwischen dem Aufsteuerdruck und dem Lastdruck), so dass auch hohe Arbeitsdrücke von 350 bis 400 bar problemlos beherrschbar sind. Die Bestromung der Proportionalmagneten 18, 20 zum Einstellen der Schwimmstellung ist zwar gleich, kann aber individuell stärker oder schwächer gewählt werden, um die Umschaltung der Arbeitsstrom-2/2-Druckregelsitzventile 3, 4 nach Wunsch härter oder weicher vorzunehmen, abhängig von der jeweils damit verbundenen EHR-Funktion.

Der Lastdrucksignalkreis 14 mit dem jeweiligen Lastdrucksignal LS wird aus konventionellen Anzapfungen des Dreistellungs-Schieberventils W über den Schieber 31 gespeist.

## Patentansprüche

1. Elektrohydraulische Steuervorrichtung (H) eines doppelt wirkenden Hydromotors (M), mit einem zwischen einer Druckquellen-Tank-Anordnung (P, R) und Arbeitsleitungen (9, 10) des Hydromotors (M) angeordneten Mehrstellungs-Mehrwege-Schieberventil mit zwei Proportional-Druckvorsteuerungen (15, 16) für einen durch eine Federanordnung (17) beaufschlagten Schieber (31) und einem Arbeitsstrom-2/2-Druckregetsitzventii (3, 4) in jeder Arbeitsleitung (9, 10), das in einem Steuerkreis in Sperrrichtung aus der Arbeitsleitung (9 oder 10) hydraulisch druckvorgesteuert ist, wobei der Steuerkreis zwei in Öffnungsrichtung an die Arbeitsstrom-2/2-Druckregelsitzventile (3, 4) angeschlossene Steuerleitungen (24, 25) aufweist, von denen jede bei Bestromung (PE01, PE02) eines proportionalen Magneten (18, 20) zumindest einer der beiden Proportional-Druckvorsteuerungen (15, 16) wahlweise mit einem aus einer Steuerdruckversorgung (7, 8) abgeleiteten Steuerdruck (Pst1, Pst2) beaufschlagbar ist, und in einer für beide Arbeitsleitungen (9, 10) zum Tank (R) offenen Neutralstellung (O) des Mehrstellungs-Mehrwege-Schieberventils über die beiden Arbeitsstrom-2/2-Druckregelsitzventile (3, 4) eine mit dem Tank (R) kommunizierende Schwimmstellung des Hydromotors (M) einstellbar ist, **dadurch gekennzeichnet, dass** die elektrohydraulische Steuervorrichtung (H) in eine multifunktionelle elektronisch-hydraulische Hubwerksregelung (EHR) eingegliedert ist und als Mehrstellungs-Mehrwege-Schieberventil ein Dreistellungs-Schieberventil (W) aufweist, mit dem in der Neutralstellung (0) die Schwimmstellung durch gleichzeitiges Bestromen der Proportional-Magneten (18, 20) beider Proportional-Druckvorsteuerungen (15, 16) mit den aus den Proportional-Druckvorsteuerungen (15, 16) direkt in Öffnungsrichtung an die Arbeitsstrom-2/2-Druckregelsitzventile (3, 4) übertragenen Steuerdrücken (Pst1, Pst2) einstellbar ist.

2. Elektrohydraulische Steuervorrichtung nach Anspruch 1, **dadurch gekennzeichnet, dass** jede Steuerleitung (24, 25) an eine am Dreistellungs-Schieberventil 0N) vorgesehene Anzapfung (22, 23) jeweils einer Proportional-Druckvorsteuerung (15, 16) angeschlossen ist, dass die Anzapfung (22, 23) zu einem Kanal oder zu einer Steuerkammer des Dreistellungs-Schieberventils (W)führt, in welchem bzw. in welcher ein vom jeweiligen Proportional-Magneten (18, 20) betätigtes Druckminderventil (19, 23) einen tatsächlichen, aus einem Druckniveau (Pst) der Steuerdruckversorgung (6) proportional gesteuerten Schieber-Betätigungsdruck generiert, der als der Steuerdruck (Pst1, Pst2) in die jeweilige Steuerleitung (24, 25) einspeisbar ist, und dass bei gleichzeitiger gleichartiger Bestromung der beiden Proportional-Magneten (18, 20) der Schieber (31) von der Federanordnung (17) entweder in die Neutralstellung (0) stellbar und/oder in dieser haltbar ist.

3. Elektrohydraulische Steuervorrichtung nach Anspruch 1, **dadurch gekennzeichnet, dass** jedes Arbeitsstrom-2/2-Druckregelsitzventil (3, 4) eine Öffnungsrichtungs-Druckvorsteuerung (27, 28) aufweist, an die eine Steuerleitung (24, 25) angeschlossen ist, die ein differenzdruckabhängig in der Steuerleitung (24, 25) bis in eine Absperrstellung umstellbares Wechselventile (34, 35) enthält, und dass zur differenzdruckabhängigen Umstellung von jedem Wechselventil (34, 35) eine Hilfssteuerleitung (36, 37) zu derjenigen Arbeitsleitung (9, 10) führt, in der das jeweils andere Arbeitsstrom-2/2-Druckregelsitzventil (3, 4) angeordnet ist.

4. Elektrohydraulische Steuervorrichtung nach wenigstens einem der vorhergehenden Ansprüche, **dadurch gekennzeichnet, dass** jedes Arbeitsstrom-2/2-Druckregelsitzventil (3, 4) ein hydraulisch entsperrbares Rückschlagventil und auf ein Aufsteuerverhältnis von etwa 1:25 bis 1:50 zwischen einem Aufsteuerdruck und einem Lastdruck ausgelegt ist.

5. Elektrohydraulische Steuervorrichtung nach wenigstens einem der vorangehenden Ansprüche, **dadurch gekennzeichnet, dass** die elektrohydraulische Steuervorrichtung (H) in der elektronisch-hydraulischen Hubwerksregelung (EHR) am wenigstens ein elektronisches Steuergerät (CU) angeschlossen ist, das für EHR-Funktionen mit unterschiedlichen Sensoren (30) verknüpft ist.

## Claims

1. Electrohydraulic control device (H) of a double-acting hydromotor (M), comprising a multi-position-multi-way-slider valve having two proportional-pilot pressure controls (15, 16) for a slider (31) loaded by a spring arrangement (17) between a pressure source-tank arrangement (P, R) and working lines (9, 10) of the hydromotor (M), and a working flow-2/2-pressure regulating seat valve (3, 4) in each working line (9, 10), the working flow-2/2-pressure regulating seat valve (3, 4) being hydraulically pilot controlled in blocking direction from the working line (9) or (10) in a control circuit, wherein the control circuit is provided with two control lines (24, 25) connected in opening direction with the working flow-2/2-pressure regulating seat valves (3, 4), of which control lines (24, 25) each can be supplied selectively with a pilot pressure (Pst1, Pst2) derived from a pilot pressure supply (7, 8) when a proportional solenoid (18, 20) of at least one of both proportional-pilot pressure controls (15, 16) is supplied with electric current (PEO1, PEO2), and wherein in an open neutral position (O) of the multi-position-multi-way-slider valve via a floating position of the hydromotor (M) then communicating with the tank (R) can be adjusted both working lines (9, 10), **characterized in that** the electrohydraulic control device (H) is incorporated into a multi-functional electronic-hydraulic hoisting gear regulation system (EHR) and comprises as the multi-position-multi-way-slider valve a three position-slider valve (W), by which in the neutral position (O) the floating position is adjusted by simultaneously supplying electric current to the proportional-solenoids (18, 20) of both proportional-pilot pressure controls (15, 16) and by the pilot pressures (Pst1, Pst2) directly transmitted from the proportional-pilot pressure controls (15, 16) respectively in opening direction to the working flow-2/2-pressure regulating seat valves (3, 4).

2. Electrohydraulic control device according to claim 1, **characterized in that** each pilot control line (24, 25) is connected with a tap (22, 23) of a respective proportional-pilot pressure control (15, 16) of the three position-slider valve (W), that the tap (22, 23) extends to a channel or to a control chamber of the three position-slider valve (W) within which a pressure reducing valve (19, 23) actuated by the respective proportional-solenoid (18, 20) generates a proportionally controlled actual slider-actuating pressure from a pressure level (Pst) of the control pressure supply (6), which actual slider-actuating pressure is supplied as the pilot pressure (Pst1, Pst2) control to the respective control line (24, 25), and that in case of electric current simultaneously and equally supplied to both proportional-solenoids (18, 20) the slider (31) either is adjusted into the neutral position (O) and/or is maintained in the neutral position (O).

3. Electrohydraulic control device according to claim 1, **characterized in that** each working flow-2/2-pressure regulating seat valve (3, 4) has an opening direction-pilot control (27, 28) connected with one control line (24, 25) which contains a switch-over valve (34, 35) which is switchable into a blocking position depending from a differential pressure in the control line (24, 25), and that for switching each switch-over valve (34, 35) depending from the pressure difference an auxiliary control line (36, 37) extends to the respective working line (9, 10) containing the respective other working flow-2/2-pressure regulating seat valve (3, 4).

4. Electrohydraulic control device according to at least one of the preceding claims, **characterized in that** each working flow-2/2-pressure regulating seat valve (3, 4) is a hydraulically unlockable check valve and is designed with an opening control ratio of about 1:25 to 1:50 between an opening pressure and a load pressure.

5. Electrohydraulic control device according to at least one of the preceding claims, **characterized in that** the electrohydraulic control device (H) is connected in the electronic-hydraulic hoisting gear regulation system (EHR) with at least one electronic control apparatus (CU) interlinked with different sensors (30) for executing the EHR-functions.

## Revendications

1. Dispositif de commande électrohydraulique (H) d'un moteur ou vérin hydraulique (M) à double effet, comprenant une vanne à tiroir multi-positions et multi-voies avec deux commandes pilotes de pression proportionnelles (15, 16), qui est disposée entre un agencement de source de pression-réservoir (P, R) et des conduites de travail (9, 10) du moteur hydraulique (M), et est destinée à un tiroir (31) sollicité par un agencement de ressort (17), et comprenant également une vanne à siège 2/2 de régulation de pression de l'écoulement de travail (3, 4) dans chaque conduite de travail (9, 10), qui, dans un circuit de commande, est commandée hydrauliquement par une pression pilote en direction de la fermeture à partir de la conduite de travail (9 ou 10), dispositif dans lequel le circuit de commande présente deux conduites de commande (24, 25) raccordées dans la direction d'ouverture aux vannes à siège 2/2 de régulation de pression de l'écoulement de travail (3, 4), et dont chacune, lors de l'alimentation en courant (PE01, PE02) d'un aimant proportionnel (18, 20) d'au moins l'une des deux commandes pilotes de pression proportionnelles (15, 16), peut être alimentée sélectivement avec une pression de commande (Pst1, Pst2) dérivée d'une alimentation de pression de commande (7, 8), et dans une position neutre (O) d'ouverture vers le réservoir (R) de la vanne à tiroir multi-positions et multi-voies, pour les deux conduites de travail (9, 10), il est possible de régler, par l'intermédiaire des deux vannes à siège 2/2 de régulation de pression de l'écoulement de travail (3, 4), une position flottante du moteur hydraulique (M) communiquant avec le réservoir (R),
**caractérisé en ce que** le dispositif de commande électrohydraulique (H) est intégré à une régulation hydro-électronique de groupe de relevage (EHR) multifonctionnelle, et comporte en guise de vanne à tiroir multi-positions et multi-voies, une vanne à tiroir à trois positions (W) à l'aide de laquelle peut être réglée, dans la position neutre (O), ladite position flottante, par alimentation en courant simultanée des aimants proportionnels (18, 20) des deux commandes pilotes de pression proportionnelles (15, 16), à l'aide des pressions de commande (Pst1, Pst2) transmises directement à partir des commandes pilotes de pression proportionnelles (15, 16), dans la direction d'ouverture, aux vannes à siège 2/2 de régulation de pression de l'écoulement de travail (3, 4).

2. Dispositif de commande électrohydraulique selon la revendication 1, **caractérisé en ce que** chaque conduite de commande (24, 25) est raccordée à un point de soutirage (22, 23) prévu sur la vanne à tiroir à trois positions (W), de la commande pilote de pression proportionnelle (15, 16) respective, **en ce que** le point de soutirage (22, 23) mène à un canal ou à une chambre de commande de la vanne à tiroir à trois positions (W), dans lequel ou dans laquelle une vanne de réduction de pression (19, 23) actionnée par l'aimant proportionnel respectif (18, 20) génère une pression d'actionnement de tiroir effective, qui est commandée proportionnellement à partir d'un niveau de pression (Pst) de l'alimentation de pression de commande (6) et peut être envoyée comme étant la pression de commande (Pst1, Pst2) dans la conduite de commande (24, 25) respective, et **en ce que** dans le cas d'une alimentation en courant simultanée et identique des deux aimants proportionnels (18, 20), le tiroir (31) peut être déplacé dans la position neutre (O) et/ou maintenu dans celle-ci par l'agencement de ressort (17).

3. Dispositif de commande électrohydraulique selon la revendication 1, **caractérisé en ce que** chaque vanne à siège 2/2 de régulation de pression de l'écoulement de travail (3, 4) présente une commande pilote de pression de direction d'ouverture (27, 28), à laquelle est raccordée une conduite de commande (24, 25), qui renferme une valve d'inversion (34, 35) pouvant être déplacée en fonction d'une différence de pression jusqu'à une position de blocage dans la conduite de commande (24, 25), et **en ce que** pour le déplacement d'inversion, une conduite de commande auxiliaire (36, 37) mène de chaque valve d'inversion (34, 35) à la conduite de travail (9, 10) dans laquelle est agencée respectivement l'autre vanne à siège 2/2 de régulation de pression de l'écoulement de travail (3, 4).

4. Dispositif de commande électrohydraulique selon l'une au moins des revendications précédentes, **caractérisé en ce que** chaque vanne à siège 2/2 de régulation de pression de l'écoulement de travail (3, 4) est une vanne anti-retour pouvant être débloquée hydrauliquement, et est dimensionnée pour un rapport de commande d'ouverture d'environ 1:25 à 1:50 entre une pression de commande d'ouverture et une pression de charge.

5. Dispositif de commande électrohydraulique selon l'une au moins des revendications précédentes, **caractérisé en ce que** le dispositif de commande électrohydraulique (H) est, dans la régulation hydro-électronique de groupe de relevage (EHR), raccordé au dit au moins un appareil de commande électronique (CU), qui est combiné à différents capteurs (30) pour des fonctions EHR.
